Europäisches Patentamt

European Patent Office

Office européen des brevets

(19)

(11) **EP 1 293 251 A1**

(12) **EUROPEAN PATENT APPLICATION**

(43) Date of publication:
**19.03.2003 Bulletin 2003/12**

(51) Int Cl.⁷: $B02C\ 4/02$, $A23L\ 1/236$

(21) Application number: **01203497.1**

(22) Date of filing: **14.09.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Holland Sweetener Company V.o.F.
6167 RA Geleen (NL)**

(72) Inventors:
• **Kühn, Frank Thomas
  6163 KC Geleen (NL)**
• **Hoek, Annette Catherina
  6471 JH Kerkrade (NL)**

(54) **Process for the production of alpha-L-aspartyl-l-phenylalanine methyl ester powder**

(57)    The invention relates to a process for the production of α-L-aspartyl-L-phenylalanine methyl ester (APM) powder wherein the upper limit of the particle size distribution (p.s.d.) of the powder, expressed as the $d_{99}$, is controllable, wherein an APM starting material, comprising at least 5 wt% of APM particles larger than the $d_{99}$ of the APM powder to be obtained, is subjected to treatment in at least one roller mill, each such roller mill comprising at least one roller pair, each roller pair consisting of two smooth rollers of which at least one is rotating such that the APM starting material, or APM intermediate powder for any second or further roller mill, is transported into the roller gap of said roller mill. The invention also relates to an APM powder with a $d_{99}$ of < 500 μm produced by the process according to the invention and the use of siad APM powder for the production of tablets by direct compression.

EP 1 293 251 A1

**Description**

The invention relates to a process for the production of α-L-aspartyl-L-phenylalanine methyl ester powder wherein the upper limit of the particle size distribution (p.s.d.) of the powder, expressed as the $d_{99}$, is controllable. As used herein the $d_{xx}$ is defined such that xx wt% of the particles in the powder has a particle diameter being smaller than $d_{xx}$. The value of xx can be any integer from 0 to 100. The $d_{xx}$ can be determined by sieve analysis or other techniques known by the skilled man. The invention is also related to an α-L-aspartyl-L-phenylalanine methyl ester powder produced by such a process and to the use of such a powder for the production of tablets by direct compression and for the production of sachets containing α-L-aspartyl-L-phenylalanine methyl ester.

α-L-Aspartyl-L-phenylalanine methyl ester (hereinafter also referred to as APM or aspartame) is an intense sweetener having a sweetening power of approximately 200 times that of sucrose and an excellent taste profile without, for example, the bitter aftertaste of other intense sweeteners such as, for example, saccharin and cyclamate. The sweetener APM is used in a wide range of products such as low-calorie soft drinks, sweets, table-top sweeteners, pharmaceuticals, etc.

Different methods are available for the production of APM from its starting materials on an industrial scale. For example, chemical or enzymatic processes for the coupling of L-aspartic acid (or derivatives thereof) and L-phenylalanine (or derivatives thereof, for example its methyl ester). Enzymatic processes may start from a D,L-phenylalanine derivative. APM is obtained in all such processes as a crystallized solid recovered by solid-liquid separation. In order to obtain APM with a low moisture content, i.e. generally < 4 wt%, a drying step is usually applied, followed by one or more formulation steps. Without any specific aftertreatment, like for example by sieving, APM produced by such processes usually has a broad p.s.d. of which the upper limit is hardly controllable at a desired value. Generally, the largest particles in an APM powder determine its dissolution time; very small particles (fines, usually < 30 μm) present in APM powders, even in broad p.s.d. APM powders, have the tendency to make the powder less free-flowing and therefore difficult to dose and discharge, for instance from a hopper, to cause dust problems in handling of the powder, and to be electrostatically chargeable.

In EP-A-585-880 a process is described in which an APM powder is produced from raw APM by compacting air-dried and milled powdery APM under pressure, after which the compacted APM is subsequently broken, sieved, milled, and again sieved. In the milling step, a bridging-and-cracking type of milling machine named Roll Granulator is used, comprising two rollers each having cutting edges fixed on each of the rollers at certain intervals. The APM is crushed between such cutting edges. The particle sizes of the final granules produced range from approximately 180 to 850 μm.

A disadvantage of said known process is that it is laborious as it comprises compacting, breaking, milling and several sieving steps, as well as large recycle streams. The Roll Granulator, moreover, makes the system quite sensitive towards scaling on the rollers, as it is difficult to equip such a system with a cleaning means like a scraper or a brush. The obtained product has a rather broad p.s.d., a relatively large average particle size and a relatively high $d_{99}$-value, which appears to be only controllable in the uppermost part of said p.s.d. range ranging from approximately 180 to 850 μm.

The object of the present invention is to provide a more simple and commercially attractive process for the production of APM powder wherein the $d_{99}$ is controllable within a broad range and wherein APM powder of any desired $d_{99}$ from a broad range of $d_{99}$'s can be obtained in high yield from solid APM as obtained in an APM production process after the solid-liquid separation and drying steps.

Surprisingly, this object is achieved according to the invention by subjecting an APM starting material, comprising at least 5 wt% of APM particles larger than the $d_{99}$ of the APM powder to be obtained, to a treatment in at least one roller mill, each such roller mill comprising at least one roller pair, each roller pair consisting of two smooth rollers of which at least one is rotating such that the APM starting material, or APM intermediate powder for any second or further roller mill, is transported into the roller gap of such roller mill. As used in the present specification, an APM intermediate powder is defined as an APM powder obtained by passing the APM starting material through one or more roller pairs and which is subsequently fed to and passed through to at least one further roller pair. For example, if two roller pairs are applied the material obtained after passing the APM starting material through the first roller pair is the APM intermediate powder, which is subsequently fed to and passed through the second roller pair to yield the APM powder to be obtained. If three roller pairs are applied the material obtained after passing the APM starting material through the first roller pair is the first APM intermediate powder, which is subsequently fed to and passed through the second roller pair to yield the second APM intermediate powder, which is subsequently fed to and passed through the third roller pair to yield the APM powder to be obtained.

The amount of APM particles in the APM starting material being larger than the $d_{99}$ of the APM powder to be obtained should be at least 5 wt%, but is preferably > 10 wt%, more preferably > 20 wt%, most preferably > 40 wt% of the APM starting material.

Smooth rollers are being applied. As used in the present specification, a smooth roller is defined as a roller without any profile having been applied thereon deliberately. Small irregularities or scratches may, however, be present on the roller surface, the roughness index $R_t$ being preferably smaller than 1000 μm, more preferably smaller than 250 μm, in particular smaller than 50 μm. Herein $R_t$ is defined as for example in Dubbel, Taschenbuch für den Machinenbau, W. Beitz and K.-H. Küttner (Eds), Springer-Verlag, Berlin (1983), p. 336 and measured according to DIN 4766. An advantage of the surface being smooth is that various means, for example a scraper or a brush, can be applied to mechanically remove any material adhering to the roller surface efficiently without interruption of the production process. As such the occurrence of scaling problems can be avoided. The relatively small quantities of product removed from the smooth rollers may be recycled to any suitable part of the process according to the invention or to any other suitable part of an APM production process if the process according to the invention is used as an integral part of an APM production process.

The smooth rollers of the roller mill(s) as used may be made of any material of sufficient mechanical strength, for example a metal, for instance (stainless) steel, or a ceramic material. Different rollers do not necessarily need to be made of the same material.

The dimensions of the roller mill(s), the individual rollers and the roller gap(s) are not particularly critical and can be chosen by a person skilled in the art. The dimensions will depend on, for example, the p.s.d. of the end product, the breaking behaviour of the starting material, and the mass flow through the roller mill(s). Typically, rollers are used having a diameter (= 2 x radius) of from 10 to 100 cm, preferably of from 20 to 60 cm and a length of from 10 to 200 cm, preferably of from 50 to 200 cm. The two smooth rollers forming a roller pair may have different diameters. However, when the difference between the diameters of the smooth rollers of the same roller pair becomes too large, problems may occur concerning the transportation of the APM starting material to the gap between the rollers of such roller pair. Therefore, the smooth rollers belonging to the same roller pair preferably have approximately the same diameter. The lengths of all rollers used in the roller pair or subsequent roller pairs also are preferably approximately the same.

The APM starting material is preferably dosed to the roller mill such that the amount of dosed APM starting material transported into the roller gap of a roller pair is optimised at the roller gap selected such that such roller pair operates in a good trade-off between capacity and quality. For achieving the best results as to the p.s.d. and $d_{99}$ of the APM powder to be obtained, as well as to its production rate, the feed of APM starting material preferably should be distributed as evenly as possible over almost over the whole length of the gap of the (first) roller mill, and, of course the same should apply to the intermediate APM powder as will be fed to any second or further roller mill. Feeding the APM starting material to the (first) roller mill can conveniently be done applying a trough or vibratory conveyor, a conveyor belt or a roller feeder, for example a chamber roller feeder or a corrugated roller feeder.

A smooth roller n in the roller mill rotates with an angular velocity $\omega_n$ [in $s^{-1}$] and has a tangential velocity which is defined as $\omega_n.r_n$[in $m/s$], wherein $r_n$ is the radius of roller n [in $m$]. Preferably, the two smooth rollers of one roller pair are counter-rotating, i.e. one roller is rotating with a positive angular velocity and the other roller is rotating with a negative angular velocity, such that in the roller gap the tangential velocities of both rollers are in downward direction. Although not preferred, it is however possible that the tangential velocity of one of the rollers of a roller pair is in upward direction and the tangential velocity of the other roller belonging to the same rolller pair is in downward direction, providing that the absolute tangential velocity of the roller with a tangential velocity in downward direction is higher than the absolute tangential velocity of the roller with a tangential velocity in upward direction in order to take care of a downward transportation of the (starting or intermediate) material into the roller gap. The tangential velocities of the rollers of any roller pair may vary between broad ranges and the settings can easily be adjusted by a skilled person. Factors determining the most suitable tangential velocity are, for example, the throughput of the APM starting material through the roller pair and the desired product quality. For counter-rotating rollers the average tangential velocity of the two rollers forming a roller pair is defined as

$$\frac{|\omega_1.r_1| + |\omega_2.r_2|}{2}$$

and is preferably chosen such that, at the width of the gap between the rollers as has been adjusted, a favourable balance between the throughput and the product quality is obtained and will typically be between 0.5 and 20 m/s, preferably between 1 and 10 m/s.

Preferably, the tangential velocities of the two counter-rotating smooth rollers forming a roller pair are set differently in order to create friction in addition to the normal pressure exerted on the particles in the roller gap. This has a positive effect on the milling process. The ratio between the absolute tangential velocity of the smooth roller with the highest tangential velocity and the absolute tangential velocity of the counter-rotating smooth roller with the lowest tangential velocity is called friction ratio. The most suitable value of the friction ratio depends on, for example, the type of APM starting material and can be selected by the skilled person. According to the process of the invention, the friction ratio is usually selected at higher than 1.1, preferably higher than 1.5, more preferably higher than 1.8. Extremely high friction ratios, however, should be avoided in order to prevent deterioration of powder quality. Typically, the friction ratio will be selected lower than 10, preferably 5, more preferably 3.

More than one roller pair can be applied in series if so desired, the total set of roller pairs optionally comprising one or more common rollers, i.e. (a) roller(s) being part of more than one roller pair. The use of more than one roller pair usually improves the quality of the final APM powder obtained, but has an adverse effect on the investment costs. Consequently, the balance between investment costs and required APM powder quality determines the most suitable number of roller pairs. Preferably, more than one roller pair is applied in series, more preferably 2 roller pairs are applied in series. Optionally, one or more sieves can be used in the process, for example upstream the roller pair used most upstream, or between 2 pairs of rollers, except, of course, when these pairs have 1 or more rollers in common, and/ or downstream the roller pair used most downstream, in order to classify the APM powder to collect the part which already has the desired particle size and, if desired, recycle the part of the material falling outside the desired particle size range for the APM powder.

The roller gap between smooth rollers belonging to one roller pair can be adjusted between broad limits. However, the roller gap should always be adjusted such that at least some decrease of the $d_{99}$ of the APM starting material (or intermediate APM product) can be observed. The optimum for the roller gap(s) is dependent on, for example, the desired $d_{99}$ of the APM powder to be obtained. Also the p.s.d. and $d_{50}$ of the APM starting material is an important factor; if a very coarse APM starting material is used, a larger roller gap may be more suitable, optionally in combination with one or more smaller roller gaps of (an) additional roller pair(s) used more downstream in the process. If more than one roller pair is applied, the roller pairs preferably have different roller gaps. Typically, the roller gap decreases going to roller pairs used more downstream in the process.

A broad range of APM starting materials may be applied, including, for example, APM materials produced in the processes as described in EP-503903, WO-89-00819 and EP-A-585880. Typically APM starting materials with APM particle sizes up to e.g. 20 mm can be used. Preferably the APM starting material contains between 0.2 and 10 wt% of water, more preferably between 1 and 5 wt% of water, in particular about 3 wt% of water. The presence of free water in APM, which is the case when the water content exceeds about 4 wt%, has a negative effect on the milling process, i.e. instead of breaking up properly APM containing too much water tends to smear out on the roller surface. The APM starting material used in the process according to the invention also may be mixed with one or more other components with comparable particle size when subjected to the treatment in the roller mill. Examples of such components are edible components, for example other intense sweeteners or sugar, citric acid, lactose and maltodextrine, as are generally used in intense sweetener compositions.

The relative humidity of the atmosphere in which the process according to the invention is carried out can be that of the ambient air, but is preferably adjusted to a sufficiently low level in order to keep the water content of the APM starting material and product as low as possible. This can be done, for instance, by conditioning the ambient air using standard technology or by performing the process according to the invention in a nitrogen atmosphere. Typically, the relative humidity of the atmosphere is lower than 90 %, preferably lower than 75 %, more preferably lower than 50 %, most preferably lower than 30 %.

The process according to the invention can be applied as (an integrated) part of an APM production process, or can be used for the treatment of solid APM products in general. In the latter case, the process according to the invention is similar to the situation where it is being applied in an APM production process as a final process step ("end-of-pipe" process step). If the process according to the invention is applied as a part of an APM production process, it usually will be applied at an intermediate stage of the APM production process, preferably after the drying step. The APM powder obtained by the method according to the invention can be used as the final product to be marketed, or can be re-introduced into any suitable part of the APM production process.

The process according to the invention offers the possibility to controllably produce a wide range of APM powder materials with desired, preferably narrow, particle size range and $d_{99}$. Particularly suitable is the possibility to produce APM powders with a small $d_{99}$, for example smaller than 500 µm, more preferably smaller than 300 µm, in particular smaller than 250 µm, most preferably smaller than 200 µm. The APM powders obtained according to the process of the invention are very suitable for applications in which accurate, reproducible and constant dosing of APM powder is important, as is, for example, the case for the production of sachets containing APM powder and the production of tablets. The inventors have found that APM powders with a $d_{99}$ smaller than 200 µm are particularly suitable for the production of tablets by direct compression. It has surprisingly been found that tablets containing APM made by direct compression of formulations comprising such APM powders as have been made according to the invention have superior dissolution and disintegration properties. The process according to the invention is thus particularly suitable to produce APM powders for tableting applications because APM powders with a small $d_{99}$ can be produced in one step, in high yield and without the need for additional sieving steps.

APM powders produced in the process according to the invention and used for tableting applications preferably have a compressibility of < 30%, more preferably of < 25 %. The lower the value for compressibility, the better the efficiency of the tablet making process. APM powders with a low compressibility can be obtained according to the invention by controlling the p.s.d. such that the amount of fines is minimized.

The flowability of APM powder is of major importance for many applications, for example tableting and applications in which accurate, constant and reproducible dosing of APM or mixing of APM with other ingredients is required. A measure of the flowability is the angle of repose (a.o.r.), measured according to DIN/ISO 4324. APM powders produced in the process according to the invention and used for tableting applications preferably have an a.o.r. of < 40°, more preferably <38°.

The invention will now be explained in more detail with reference to the following examples and the comparative example, without, however, being limited thereto.

## EXAMPLES

### Examples 1-3. Roller mill treatment of APM using one roller pair

Dry APM obtained by a process as described in EP-530903 was used as the starting material and subjected to a single pass treatment on a roller mill on lab scale, the roller mill comprising one roller pair containing two equally sized counter-rotating smooth rollers (length 10 cm, diameter 20 cm), both equipped with scrapers in a convenient position.

The following conditions were applied for roller 1 and roller 2: $|\omega_1 r_1| = 10$ m/s; $|\omega_2 r_2|$: 5 m/s; friction ratio = $|\omega_1 r_1|/|\omega_2 r_2|$ = 2.0.

The roller gap and the throughput were varied. The p.s.d.'s of the products obtained, as determined by sieve analysis, are given in Table 1.

Table 1.

| P.s.d.'s of starting material and products from single pass roller mill treatment of dry APM. The p.s.d. is expressed as wt% of particles of the given particle size compared to the total amount of product. | | | | |
|---|---|---|---|---|
| Particle size range (μm) | APM starting material | Example 1 Roller gap = 0.25 mm; throughput 33 kg/h | Example 2 Roller gap = 0.18 mm; throughput 33 kg/h | Example 3 Roller gap = 0.20 mm; throughput 47 kg/h |
| | Figures in wt% | | | |
| <50 | 0 | 15.0 | 22.3 | 9.7 |
| 50-100 | 0 | 13.5 | 19.5 | 13.0 |
| 100-200 | 2.6 | 45.7 | 43.6 | 38.2 |
| 200-300 | 22.1 | 19.0 | 13.9 | 30.4 |
| 300-400 | 26.3 | 3.7 | 0.7 | 8.3 |
| 400-500 | 23.6 | 1.2 | 0 | 0.4 |
| > 500 | 25 | 1.9 | 0 | 0 |
| $d_{99}$ (μm)* | 700 | 600 | 270 | 350 |

\* Obtained after extrapolation or interpolation from Rosin-Rammler-Sperling-Bennet (RRSB) distribution (DIN 66145).

Examples 1 and 2, in which roller gaps of 0.25 and 0.18 mm were used, respectively, and the throughput was 33 kg/h, clearly show the influence of the roller gap on the p.s.d.: the $d_{99}$ of the APM powder of example 1 is approximately 400 μm, while the $d_{99}$ of the APM powder obtained in Example 2, using the smaller roller gap, is approximately 300 μm. The APM powder obtained in example 2 also contains significantly less particles with a particle size between 200 and 300 μm and, on the other hand, significantly more fine particles with a particle size of less than 100 μm. Examples 3 and 1 show the effect of a higher throughput on the p.s.d. of the produced powder: despite the smaller roller gap in Example 3 (0.20 mm) compared to the roller gap in Example 1 (0.25 mm) the p.s.d. of the product obtained in Example 3 is shifted to larger particle sizes compared to the p.s.d. of the product obtained in Example 1.

Experiments 1-3 show that the process according to the invention provides a method for the production of a relatively narrow p.s.d. with controllable $d_{99}$ APM powder. As was already anticipated, experiments 1-3 show that the roller gap has a significant influence on the p.s.d. and, especially, the $d_{99}$ of the product. The effect of a higher throughput on the p.s.d. in certain particle size ranges was also shown.

Examples 4 and 5. Roller mill treatment of APM using two roller pairs in series

Dry APM obtained by a process as described in EP-530903 was used as the starting material and subjected to a treatment in a roller mill on lab scale, the roller mill comprising one roller pair containing two equally sized counter-rotating smooth rollers (length 20 cm, diameter 20 cm) each equipped with scrapers.

The following conditions were applied: tangential velocity roller 1: 3.0 m/s; tangential velocity roller 2: 1.5 m/s; friction ratio: 2.0.

Feeding of the roller mill was carried out manually at a low feeding rate, with the aim to optimise the product quality rather than the product output. As such low feeding rates the feeding rate is not expected to have an effect on the product quality.

Example 4a: the APM starting material was subjected to a first milling step in the roller mill using a roller gap of 0.4 mm. The p.s.d.'s of the starting materials and the APM products obtained are given in Table 2.

Example 4b: After sieving the product obtained in Experiment 4 the particles with a particle size > 250 μm were subjected to a second milling step using a roller gap of 0.15 mm. The p.s.d.'s of the products obtained are given in Table 2.

Table 2.

| Roller mill treatment of APM subsequently using roller gaps of 0.4 and 0.15 mm. The p.s.d. is expressed as wt% of particles of the given particle size of the total product. | | | | |
|---|---|---|---|---|
| Particle size (μm) | APM starting material Example 4 | Example 4a | Example 4b (starting from > 250 μm fraction of example 4a) | Combined product produced in example 4a and example 4b |
| < 50 | 0 | 2.5 | 7.3 | 7.9 |
| 50-100 | 0 | 2.5 | 11.8 | 11.2 |
| 100-160 | 0 | 6.9 | 22.7 | 23.7 |
| 160-200 | 0.9 | 5.6 | 20.0 | 20.4 |
| 200-250 | 3.7 | 8.8 | 20.9 | 24.3 |
| 250-500 | 60.1 | 73.1 | 17.3 | 12.5 |
| 500-630 | 22.2 | 0.63 | 0 | 0 |
| 630-800 | 13.0 | 0 | 0 | 0 |
| > 800 | 0 | 0 | 0 | 0 |
| $d_{99}$ (μm)* | 700 | 460 | 350 | 320 |

* Obtained after extrapolation or interpolation from Rosin-Rammler-Sperling-Bennet (RRSB) distribution (DIN 66145).

The first milling step (Example 4), in which a roller gap of 0.4 mm is used, yielded a rather coarse product in which 74 wt% of the particles is larger than 250 μm. Collecting these coarse particles in a sieving step, followed by treating them in a second milling step (Example 5) using a roller gap of 0.15 mm resulted in a product in which only 17.3 wt% of the particles was larger than 250 μm. The fifth column of Table 1 lists the result of combining the products produced in Example 4a and Example 4b, showing that a p.s.d. with 12.5 wt% of particles being larger than 250 μm and a $d_{99}$ of ...can be obtained in two milling steps.

Similar to examples 4a and 4b, experiments 5a and 5b were carried out with smaller roller gaps, i.e. 0.2 and 0.05 mm.

Example 5a: the APM starting material was used as the starting material and subjected to a first milling step in the roller mill using a roller gap of 0.2 mm. The p.s.d.'s of the starting material and the APM products obtained are given in Table 3.

Example 5b: After sieving the product obtained in Experiment 6 the particles with a particle size > 200 μm were subjected to a second milling step using a roller gap of 0.05 mm. The p.s.d.'s of the starting material and the products obtained are given in Table 3.

Table 3.

| | | | | |
|---|---|---|---|---|
| Multiple roller mill treatment of APM subsequently using roller gaps of 0.2 and 0.05 mm. The p.s.d. is expressed as wt% of particles of the given particle size of the total product. | | | | |
| Particle size (µm) | APM starting material Example 6 | Example 5a | Example 5b (starting from > 200 µm fraction of example 5a) | Combined product produced in example 5a and example 5b |
| <50 | 0 | 8.4 | 10.0 | 12.1 |
| 50-100 | 0 | 12.6 | 18.0 | 19.2 |
| 100-160 | 0 | 22.1 | 30.0 | 33.3 |
| 160-200 | 0.9 | 20.0 | 20.0 | 27.3 |
| 200-250 | 3.7 | 17.9 | 16.0 | 6.1 |
| 250-500 | 60.1 | 19.0 | 6.0 | 2.0 |
| 500-630 | 22.2 | 0 | 0 | 0 |
| 630-800 | 13.0 | 0 | 0 | 0 |
| >800 | 0 | 0 | 0 | 0 |
| $d_{99}$ (µm)* | 700 | 370 | 300 | 270 |

* Obtained after extrapolation or interpolation from Rosin-Rammler-Sperling-Bennet (RRSB) distribution (DIN 66145).

A single treatment with a roller gap of 0.2 mm results in a significant fraction, i.e. 26.9 wt%, of APM particles having a particle size > 200 µm. The particle size of this fraction was further reduced successfully by subjecting the fraction to a second milling step with a roller gap of only 0.05 mm, as shown in the fourth column of Table 3 (Experiment 7). The fifth column of Table 2 lists the combined result of the two milling steps, based on the total composition of the products from experiments 6 and 7, showing that a narrow p.s.d. product with only 2 wt% of particles being larger than 250 µm can be obtained in two milling steps.

Example 6 and comparative example A. Production of APM tablets by direct compression of APM powder

APM powder produced according to the invention, having a p.s.d. with 0.9 wt% of particles > 250 µm, 9.3 wt% of particles > 200 µm, 35 wt% of particles < 100 µm and 18 wt% of particles < 50 µm, a compressability of 20.5 % and an AOR of 39.9° and commercially available APM powder, having a p.s.d. with 0.4 wt% of particles > 250 µm, 11.6 wt% of particles > 200 µm, 12.5 wt% of particles < 100 µm and 3.7 wt% of particles < 50 µm, a compressability of 13.3 % and an AOR of 32.7° (Comparative example A) were used in compression mixes of the following composition: 44.44 wt% of APM powder, 42.22 wt% of lactose DC (Direct Compression), 6.67 wt% of sodium carboxy methyl cellulose and 6.67 wt% of L-leucine. Dry blends were prepared using a tumble mixer drum. The mix was compressed into tablets with a diameter of 5.0 mm and a thickness of 1.85 mm and weight of approximately 45 mg using a Copley EKN Single Punch Tablet Machine. The resulting tablets were subjected to the following assessments:

- Friability of the tablets was assessed using a Copley "Roche Type" friabilator (Erweka model), comprising a rotating drum which drops the tablets over a predetermined distance of 150 mm, a predetermined number of times (100 x). The test is described in the European Pharmacopoeia.
- Tablet hardness was measured using a Stevens Texture Analyser, consisting of a fixed plate, and a moving jaw. A tablet is held in position such that the moving jaw closes upon the tablet and compresses it across its diameter. Force is increased until the tablet fractures, peak force is used to determine the crushing strength, also known as tablet hardness. The test is described in the European Pharmacopoeia.
- Dissolution time was determined by dissolving 22 tablets in 500 ml of water at 23 °C while stirring at 470 rpm. Dissolved APM was measured by UV-VIS spectroscopy.

The results are given in Table 4.
The results show that stable compacts were formed from both blends when compressed, without the need to apply excessive compaction forces. The friability was found to be excellent and very similar for both mixes. The dissolution time of the tablets produced according to Example 6, however, was found to be significantly shorter than the dissolution time of tablets produced from the commercially available APM used in Comparative example A, demonstrating the superior dissolution properties of tablets produced by the process according to the invention.

Table 4.

| Assessment Data of Tablets. | | |
|---|---|---|
| | Example 6 | Comparative example A |
| Tablet Characteristics | | |
| Hardness of final tablets (Kp) | 4.55 | 4.54 |
| Friability of final tablets (%) | 0.00 | 0.11 |
| Dissolution time of tablets (%) | 81 | 100 |

## Claims

1. Process for the production of $\alpha$-L-aspartyl-L-phenylalanine methyl ester (APM) powder wherein the upper limit of the particle size distribution (p.s.d.) of the powder, expressed as the $d_{99}$, is controllable, wherein an APM starting material, comprising at least 5 wt% of APM particles larger than the $d_{99}$ of the APM powder to be obtained, is subjected to treatment in at least one roller mill, each such roller mill comprising at least one roller pair, each roller pair consisting of two smooth rollers of which at least one is rotating such that the APM starting material, or APM intermediate powder for any second or further roller mill, is transported into the roller gap of said roller mill.

2. Process according to claim 1, **characterized in that** the two smooth roller belonging to the same roller pair are rotating such that the friction ratio is at least 1.1.

3. Process according to claim 1 or 2, **characterized in that** more than one roller pair is applied in series.

4. Process according to any one of claims 1-3, **characterized in that** each of the smooth rollers is equipped with a means to remove any material adhering to the roller surface.

5. Process according to any one of claims 1-4, **characterized in that** the APM starting material contains between 1 and 5 wt% of water.

6. APM powder with a $d_{99}$ of < 500 μm produced by a process according to any one of claims 1-5.

7. APM powder according to claim 6, **characterized in that** the APM powder has a $d_{99}$ of < 200 μm.

8. APM powder according to claim 7, **characterized in that** the APM powder has a compressibility of < 30 %.

9. APM powder according to claim 7 or claim 8, **characterized in that** the APM powder has an angle of repose of < 40 °.

10. Use of an APM powder according to any one of claims 7-9 for the production of tablets by direct compression.

11. Use of an APM powder according to any one of claims 6-9 for the production of sachets comprising APM powder.

**European Patent Office**

**EUROPEAN SEARCH REPORT**

Application Number

EP 01 20 3497

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 98 01041 A (HOLLAND SWEETENER CO ;SLANGEN HUBERTUS JOZEF MARIA (NL); KEMPER AS) 15 January 1998 (1998-01-15) | 6-10 | B02C4/02 A23L1/236 |
| Y | * the whole document * | 11 | |
| A | EP 0 574 983 A (HOLLAND SWEETENER CO) 22 December 1993 (1993-12-22) * claims 1-11 * | 1 | |
| D,A | EP 0 585 880 A (AJINOMOTO KK) 9 March 1994 (1994-03-09) * the whole document * | 1 | |
| A | EP 0 752 272 A (SATAKE ENG CO LTD) 8 January 1997 (1997-01-08) * claim 1 * | 1,2 | |
| Y | GB 2 192 789 A (INPHARZAM INT SA) 27 January 1988 (1988-01-27) 'the distribution in and use of suitable sachets! * page 1, line 39 * | 11 | TECHNICAL FIELDS SEARCHED (Int.Cl.7) B02C A23L A23P |

The present search report has been drawn up for all claims

| Place of search | Date of completion of the search | Examiner |
|---|---|---|
| MUNICH | 4 March 2002 | Groh, B |

EPO FORM 1503 03.82 (P04C01)

## ANNEX TO THE EUROPEAN SEARCH REPORT
## ON EUROPEAN PATENT APPLICATION NO.

EP 01 20 3497

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2002

| Patent document cited in search report | | Publication date | Patent family member(s) | | Publication date |
|---|---|---|---|---|---|
| WO 9801041 | A | 15-01-1998 | NL | 1003499 C2 | 07-01-1998 |
| | | | AT | 198022 T | 15-12-2000 |
| | | | AU | 708724 B2 | 12-08-1999 |
| | | | AU | 3360497 A | 02-02-1998 |
| | | | BR | 9710999 A | 24-10-2000 |
| | | | CA | 2259491 A1 | 15-01-1998 |
| | | | CN | 1228679 A | 15-09-1999 |
| | | | DE | 69703692 D1 | 18-01-2001 |
| | | | DE | 69703692 T2 | 21-06-2001 |
| | | | EP | 0915667 A1 | 19-05-1999 |
| | | | ES | 2154465 T3 | 01-04-2001 |
| | | | WO | 9801041 A1 | 15-01-1998 |
| | | | US | 6039275 A | 21-03-2000 |
| EP 0574983 | A | 22-12-1993 | NL | 9201029 A | 03-01-1994 |
| | | | AT | 161690 T | 15-01-1998 |
| | | | AU | 662062 B2 | 17-08-1995 |
| | | | AU | 4019293 A | 16-12-1993 |
| | | | AU | 677454 B2 | 24-04-1997 |
| | | | AU | 8034994 A | 16-03-1995 |
| | | | BR | 9302275 A | 11-01-1994 |
| | | | CA | 2098053 A1 | 12-12-1993 |
| | | | DE | 69316089 D1 | 12-02-1998 |
| | | | DE | 69316089 T2 | 20-08-1998 |
| | | | EP | 0574983 A1 | 22-12-1993 |
| | | | ES | 2113473 T3 | 01-05-1998 |
| | | | MX | 9303442 A1 | 31-01-1994 |
| | | | RU | 2118099 C1 | 27-08-1998 |
| | | | US | 5411747 A | 02-05-1995 |
| | | | US | 5587178 A | 24-12-1996 |
| | | | US | RE36515 E | 18-01-2000 |
| | | | US | 5834018 A | 10-11-1998 |
| | | | ZA | 9304124 A | 14-01-1994 |
| EP 0585880 | A | 09-03-1994 | JP | 3094684 B2 | 03-10-2000 |
| | | | JP | 6078711 A | 22-03-1994 |
| | | | DE | 69312604 D1 | 04-09-1997 |
| | | | DE | 69312604 T2 | 19-02-1998 |
| | | | EP | 0585880 A2 | 09-03-1994 |
| | | | US | 5358186 A | 25-10-1994 |
| EP 0752272 | A | 08-01-1997 | JP | 9019641 A | 21-01-1997 |
| | | | AU | 697568 B2 | 08-10-1998 |
| | | | AU | 5835096 A | 16-01-1997 |
| | | | CA | 2180388 A1 | 05-01-1997 |
| | | | DE | 69607790 D1 | 25-05-2000 |

EPO FORM P0459

For more details about this annex : see Official Journal of the European Patent Office, No. 12/82

**EP 1 293 251 A1**

## ANNEX TO THE EUROPEAN SEARCH REPORT
## ON EUROPEAN PATENT APPLICATION NO.

EP 01 20 3497

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2002

| Patent document cited in search report | | Publication date | Patent family member(s) | | Publication date |
|---|---|---|---|---|---|
| EP 0752272 | A | | DE | 69607790 T2 | 26-10-2000 |
| | | | EP | 0752272 A1 | 08-01-1997 |
| | | | US | 5678777 A | 21-10-1997 |
| GB 2192789 | A | 27-01-1988 | CH | 666814 A5 | 31-08-1988 |
| | | | BE | 1000168 A3 | 05-07-1988 |
| | | | DE | 3723734 A1 | 04-02-1988 |
| | | | FR | 2601875 A1 | 29-01-1988 |
| | | | IT | 1222103 B | 31-08-1990 |
| | | | NL | 8701744 A ,B, | 16-02-1988 |
| | | | SE | 500493 C2 | 04-07-1994 |
| | | | SE | 8702941 A | 25-01-1988 |

EPO FORM P0459

For more details about this annex : see Official Journal of the European Patent Office, No. 12/82